# EUROPEAN PATENT APPLICATION

(11) **EP 4 599 688 A1**
(43) Date of publication of application: **13.08.2025**
(21) Application number: 25461509.9
(22) Date of filing: 10.02.2025
(51) Int. Cl.: A23K 10/30, A23K 10/38, A23K 20/105, A23K 20/142, A23K 20/158, A23K 20/174, A23K 20/179, A23K 20/184, A23K 20/189, A23K 20/22, A23K 20/24, A23K 20/28, A23K 20/20, A23K 50/75

(54) **A METHOD OF FEEDING LAYING HENS**

(30) Priority: 09.02.2024 PL 44773824
(71) Applicant: De Haus Sp. z o.o., 99-100 Leczyca (PL)
(72) Inventor: KACZMAREK, Izabela, 85-796 Bydgoszcz (PL)
(74) Representative: Kancelaria Eupatent.pl Sp. z.o.o

(57) **Abstract**

A method of feeding laying hens characterised in that the laying period from 20 weeks of age to the end of production is divided into the following phases: a Pre-Peak Phase (weeks 20-25), a Production Phase 1 (weeks 26-50), a Production Phase 2 (weeks 50-70), a Production Phase 3 (weeks from 70 to the end of production), wherein, during each phase, the hens are fed a feed of the specific quantitative and qualitative composition.

## Description

### TECHNICAL FIELD

The object of the invention is a method of feeding laying hens.

### BACKGROUND

The constant increase in the human population necessitates that food is secured and supplied on a regular basis. Consequently, the production of meat, particularly white meat (i.e. poultry meat), is expected to increase year on year. However, it should be borne in mind that as a result of animal production, large amounts of post-production waste are generated, and the rearing process itself negatively affects the surrounding biosphere (Velthof et al. 2008; Küsters 2009). Intensive animal husbandry produces 60-85 kg of faeces per 1 tonne of body weight per day, with an organic matter content of 75-85% in dry matter (Roszkowski 2011). In the report "Livestock and Climate Change" published in 2009 by the Worldwatch Institute, it was calculated that emissions from animal husbandry account for as much as 51 % of total global greenhouse gas emissions, or approximately 32.6 billion tonnes of carbon dioxide equivalent.

To counteract these effects, butyric acid, for example, is used. The effects of butyric acid and sodium butyrate as ingredients in feed additives were described in patent CN107927518 relating to pig nutrition. The additive demonstrated advantages in terms of favourable form and feeding effect, maintaining a healthy digestive tract in pigs and reducing animal diarrhoea. A feed formulation containing sodium butyrate, as described in patent CN105360643, showed positive effects on piglet rearing and feeding. Another patent, CN10435150, describes a feed containing sodium butyrate, citric acid, a probiotic (Bacillus subtilis), and a mixture of vitamins and elements, and its use in broiler rearing. This feed enhanced digestion, increased feed intake, and improved the economics of production. Furthermore, the mixture of butyric and benzoic acids described in patent WO2017063179 had a positive effect on stomach pH and the intestinal microflora.

At the same time, as drastic as it may sound, in the case of some animal products such as eggs, the animals first become a cost and then a waste, which is very difficult to manage over the production period. The "cost" period is primarily due to the declining productivity of ageing animals, whose production efficiency declines until milk or egg production is finally halted. Consequently, modern compound feeds incorporate additives or entire complexes of ingredients which, in addition to providing nutrients for the animals, are intended to extend their productive life and maintain or improve the quality of the products obtained from them.

In the case of poultry, a factor that significantly reduces animal welfare is the susceptibility to disease, or even epidemics, which is counteracted by feeding or watering the animals with substances that promote resistance, for example, to bacterial infections. Patent application P-369985 (published 20-03-2006) describes a method for obtaining bacteriocins produced by bacteria of the Carnobacterium genus. In the method according to the invention, bacteriocins are synthesised by bacteria of the Carnobacterium divergens and/or Carnobacterium piscicola species during their growth in a production bioreactor using known culture methods under anaerobic conditions, wherein the medium for bacteriocin production is thermally sterilised at a temperature above 100 °C for a period of at least 30 minutes and the culture is carried out under the following parameters: an initial density of the bacteriocin-producing bacteria in the medium of no less than 10^5 cfu/ml, a temperature in the range of 20-37 °C, and a pH in the range of 5.5-7.0, preferably at specified levels. When using the batch or intermittent-double-dose method, the culture is maintained for a period covering the logarithmic phase of cell growth. When using the continuous method, the dilution rate of the medium (D) is maintained in the range of 0.02 h⁻¹ to 0.08 h⁻¹. When using the continuous method with recirculation of cells, the circulation rate of the medium in the membrane filter is maintained above 0.1 m/s and the medium is diluted at a rate (D) in the range of 0.08-0.25 h⁻¹. Biomass is collected at a rate above 10% relative to the dilution rate of the medium. Upon completion of the culture, the bacteriocins are separated from the bacterial cells by subjecting the cells to a shock reduction in pH and/or reduced water activity, and the bacteriocins are then concentrated and fixed by one of the known methods.

Patent application P-369986 (published 20-03-2006) presents a method for obtaining a listericidal bacteriocin culture of the genus Carnobacterium. The invention relates to a method for obtaining a listericidal bacterial culture of the genus Carnobacterium, wherein pure bacterial cultures of C. divergens and C. piscicola are produced in an inoculum medium to a cell density of 10^6-10^8 cfu/ml and then used to inoculate the main culture. This culture is carried out by either a batch method, a continuous method, or a continuous method with recirculation of cells under strictly defined process conditions, including a temperature of 20-37 °C and a medium pH, depending on the method used, in the range of 5.5-7.5, with an initial bacterial population density of not less than 10 cfu/ml.

The short production time, despite the infection-preventing measures in place, applies particularly to laying hens, whose productive lifespan is estimated to be between 8 and 16 months. Producers are reluctant to introduce modifications to the rearing method or prophylaxis, as this usually entails an unbalanced cost of operation. It is therefore advisable to develop a feed that will maintain or increase the laying performance of the hens and, in addition, allow the vitamins and minerals provided in the feed to be incorporated into the eggs, optimising their composition and contributing to the production of higher-quality chickens as well as tastier and healthier eggs.

### SUMMARY

A method of feeding laying hens according to the invention comprises dividing the production cycle into the following phases: a Rearing Phase (from hatching to week 17), a Pre-Lay Phase (weeks 18-19), a Pre-Peak Phase (weeks 20-25), a Production Phase 1 (weeks 26-50), a Production Phase 2 (weeks 50-70), and a Production Phase 3 (weeks from 70 to the end of production). During each phase, the birds receive a diet with specific quantitative and qualitative compositions tailored to their developmental and production requirements.

During the Pre-Lay Phase (weeks 18-19), pullets are provided with a pre-laying diet formulated with an elevated calcium level (approximately 2%) and balanced nutrients. For a period of about 10 days, each hen receives 75-95 grams per day. When egg production reaches 5% of the flock, the diet is transitioned from the pre-laying feed to a pre-peak feed.

During the Pre-Peak Phase (weeks 20-25), feed intake is gradually increased from approximately 96 grams per hen per day at week 20 to about 115 grams per hen per day at week 25. Experimental observations indicate that this feeding strategy supports an increase in the laying rate (up to 8% higher than that achieved with a comparable standard diet) and contributes to lower mortality during the subsequent peak laying period. In addition, this phase promotes a steady increase in egg weight, reduces the incidence of pullet immaturity, and enhances the hens' willingness to lay. It also helps to prevent excessive fattening, a decline in laying performance, and the occurrence of fatty liver haemorrhagic syndrome (FLHS). The quantitative and qualitative composition of the feed during these phases is set forth in the accompanying tables, and the nutrient content is specified therein.

| Component | Unit | Pre-Peak Phase Weeks 20-25 | | Sample recipe | | |
|---|---|---|---|---|---|---|
| | | Min. | Max. | I | II | III |
| FIELD BEAN (*Vicia faba* var. *equina*) | % | 0 | 4 | 0 | 0 | 4 |
| VEGETABLE OIL | % | 0.5 | 4 | 0.9 | 1 | 0.8 |
| WHEAT | % | 5 | 45 | 6 | 26 | 29.14 |
| CORN NGMO | % | 15 | 50 | 30.24 | 17.07 | 26.99 |
| OATS | % | 0 | 5 | 0 | 0 | 2 |
| BARLEY | % | 0 | 5 | 0 | 2 | 0 |
| TRITICALE | % | 0 | 30 | 27 | 17.07 | 0 |
| SBM 48.5-50% | % | 2 | 10 | 2 | 2 | 2 |
| SFM 35-38%CP | % | 5 | 15 | 15 | 17 | 16 |
| DDGS HIGH QUALITY | % | 0 | 10 | 10 | 9 | 8 |
| OTHERS BY PRODUCT | % | 0 | 5 | 0 | 0 | 2 |
| PHOSPHATE | % | 0.1 | 0.5 | 0.1 | 0.1 | 0.2 |
| COARSE CHALK | % | 2 | 7 | 5 | 5 | 5 |
| FINE CHALK | % | 1.5 | 2.5 | 2 | 2 | 2 |
| SALT | % | 0.2 | 0.4 | 0.25 | 0.27 | 0.27 |
| SODIUM BICARBONATE | % | 0.1 | 0.3 | 0.09 | 0.14 | 0.13 |
| METHIONINE | % | 0.1 | 0.3 | 0.15 | 0.14 | 0.15 |
| LYSINE | % | 0.2 | 0.5 | 0.4 | 0.41 | 0.44 |
| TREONINE | % | 0.01 | 0.1 | 0.04 | 0.04 | 0.05 |
| TRYPTOPHAN | % | 0 | 0.1 | 0.01 | 0 | 0 |
| ISOL./VALINE | % | 0.01 | 0.2 | 0.02 | 0.02 | 0.02 |
| CHOLINE CHLORIDE | % | 0.1 | 0.2 | 0.12 | 0.12 | 0.12 |
| ENZYME XYLANASE | % | 0.05 | 0.08 | 0.075 | 0.075 | 0.075 |
| PHYTASE | % | 0.03 | 0.06 | 0.06 | 0.06 | 0.06 |
| FITOBIOTICS | % | 0.05 | 0.1 | 0.015 | 0.015 | 0.015 |
| MYCOBINDER | % | 0.05 | 0.3 | 0.2 | 0.2 | 0.2 |
| RED COLORANT | % | 0.03 | 0.1 | 0.06 | 0.06 | 0.06 |
| YELLOW COLORANT | % | 0.01 | 0.1 | 0.02 | 0.03 | 0.02 |
| VIT-MIN EGG SUPER POWER PREMIX | % | 0.25 | 0.3 | 0.25 | 0.25 | 0.25 |

| Nutrient | Unit | MIN. | MAX. | I | II | III |
|---|---|---|---|---|---|---|
| Protein | % | 15.5 | 16.5 | 16 | 16 | 16.1 |
| Crude fat | % | 3.5 | - | 4 | 3.9 | 3.7 |
| Crude fibre | % | 5 | - | 5 | 5.3 | 5.2 |
| Ash | % | 10 | - | 10.6 | 10.5 | 10.4 |
| Lysine | % | 0.77 | - | 0.77 | 0.77 | 0.77 |
| Methionine | % | 0.44 | - | 0.44 | 0.43 | 0.44 |
| Met+Cyst | % | 0.74 | - | 0.74 | 0.73 | 0.73 |
| Threonine | % | 0.57 | - | 0.57 | 0.57 | 0.57 |
| Tryptophan | % | 0.17 | - | 0.17 | 0.17 | 0.17 |
| Calcium total | % | 2.9 | - | 2.9 | 2.9 | 2.9 |
| Phosphorus | % | 0.51 | - | 0.49 | 0.49 | 0.49 |
| Chlorine | % | 0.25 | - | 0.25 | 0.25 | 0.25 |
| Sodium | % | 0.17 | - | 0.17 | 0.17 | 0.17 |
| Se add | mg/kg | 0.25 | 0.35 | 0.25 | 0.25 | 0.25 |
| Vit .A add (3a672a) | IU/kg | 10000 | - | 10000 | 10000 | 10000 |
| Vit. D3 eq sum add | IU/kg | 2500 | 3200 | 3000 | 3000 | 3000 |
| Vit. E add (3a700) | mg/kg | 70 | 100 | 70 | 70 | 70 |
| Vit. B12 add | µg/kg | 80 | 140 | 100 | 100 | 100 |
| Vit. B group | IU/kg | 0.01 | 0.05 | 0.02 | 0.02 | 0.02 |
| Other minerals | mg/kg | 0.01 | 0.1 | 0.1 | 0.1 | 0.1 |

During Production Phase 1 (weeks 26-50, the so-called Peak Phase), pullets are provided with a "peak" feed formulated with a high nutrient density to support a safe and sustained peak in egg production. The feed is offered at a rate of 110-130 grams per hen per day, depending on the rearing method. The quantitative and qualitative composition of the feed during this period is set forth in the accompanying tables, with the corresponding nutrient content provided therein.

| Component | Unit | Production Phase 1 Weeks 26-50 | | Sample recipe | | |
|---|---|---|---|---|---|---|
| | | Min. | Max. | I | II | III |
| FIELD BEAN *(Vicia faba* var. *equina*) | % | 0 | 4 | 0 | 2 | 4 |
| VEGETABLE OIL | % | 0.5 | 4 | 2 | 1.2 | 1.4 |
| WHEAT | % | 5 | 45 | 19.87 | 5 | 7.25 |
| CORN NGMO | % | 15 | 50 | 15 | 27.72 | 30 |
| OATS | % | 0 | 5 | 0 | 5 | 0 |
| BARLEY | % | 0 | 5 | 5 | 0 | 0 |
| TRITICALE | % | 0 | 30 | 5 | 15 | 16.285 |
| SBM 48.5-50% | % | 5 | 15 | 7 | 13 | 10 |
| SFM 35-38%CP | % | 5 | 20 | 15 | 10 | 5 |
| DDGS HIGH QUALITY | % | 0 | 12 | 5 | 0 | 8 |
| OTHERS BY PRODUCT | % | 0 | 5 | 15 | 10 | 7 |
| PHOSPHATE | % | 0.2 | 0.7 | 0.2 | 0.35 | 0.25 |
| COARSE CHALK | % | 2 | 10 | 6.9 | 6.9 | 6.4 |
| FINE CHALK | % | 1.5 | 2.5 | 2 | 2 | 2.5 |
| SALT | % | 0.2 | 0.4 | 0.24 | 0.26 | 0.25 |
| SODIUM BICARBONATE | % | 0.2 | 0.4 | 0.2 | 0.19 | 0.19 |
| METHIONINE | % | 0.1 | 0.3 | 0.21 | 0.22 | 0.23 |
| LYSINE | % | 0.2 | 0.5 | 0.35 | 0.22 | 0.26 |
| TREONINE | % | 0.01 | 0.1 | 0.05 | 0.02 | 0.04 |
| TRYPTOPHAN | % | 0.01 | 0.1 | 0 | 0.02 | 0 |
| ISOL./VALINE | % | 0.01 | 0.2 | 0.09 | 0.02 | 0.07 |
| CHOLINE CHLORIDE | % | 0.1 | 0.2 | 0.12 | 0.12 | 0.12 |
| ENZYME XYLANASE | % | 0.05 | 0.08 | 0.075 | 0.075 | 0.075 |
| PHYTASE | % | 0.03 | 0.06 | 0.06 | 0.06 | 0.06 |
| FITOBIOTICS | % | 0.05 | 0.1 | 0.05 | 0.05 | 0.05 |
| MYCOBINDER | % | 0.05 | 0.3 | 0.25 | 0.25 | 0.25 |
| RED COLORANT | % | 0.03 | 0.1 | 0.06 | 0.06 | 0.06 |
| YELLOW COLORANT | % | 0.01 | 0.03 | 0.02 | 0.015 | 0.01 |
| VIT-MIN EGG SUPER POWER PREMIX | % | 0.01 | 0.03 | 0.25 | 0.25 | 0.25 |

| Nutrient | Unit | MIN. | MAX. | I | II | III |
|---|---|---|---|---|---|---|
| Protein | % | 16.5 | 17.5 | 17 | 17.1 | 17.2 |
| Crude fat | % | 3.8 | - | 5.22 | 4.25 | 4.55 |
| Crude fibre | % | 3.5 | - | 4.9 | 4.1 | 4.35 |
| Ash | % | 11 | - | 12.4 | 12.4 | 12.3 |
| Lysine | % | 0.84 | - | 0.84 | 0.84 | 0.84 |
| Methionine | % | 0.49 | - | 0.5 | 0.5 | 0.49 |
| Met+Cyst | % | 0.8 | - | 0.8 | 0.8 | 0.8 |
| Threonine | % | 0.58 | - | 0.58 | 0.58 | 0.58 |
| Tryptophan | % | 0.18 | - | 0.18 | 0.18 | 0.18 |
| Calcium total | % | 3.6 | - | 3.6 | 3.6 | 3.6 |
| Phosphorus | % | 0.48 | - | 0.52 | 0.49 | 0.49 |
| Chlorine | % | 0.23 | - | 0.23 | 0.23 | 0.23 |
| Sodium | % | 0.17 | - | 0.17 | 0.17 | 0.17 |
| Se add | mg/kg | 0.25 | 0.35 | 0.3 | 0.3 | 0.3 |
| Vit .A add (3a672a) | IU/kg | 10000 | | 10000 | 1000 | 1000 |
| Vit. D3 eq sum add | IU/kg | 2500 | 3200 | 3000 | 3000 | 3000 |
| Vit. E add (3a700) | mg/kg | 70 | 100 | 70 | 70 | 70 |
| Vit. B12 add | µg/kg | 80 | 140 | 100 | 100 | 100 |
| Vit. B group | IU/kg | 0.01 | 0.05 | 0.02 | 0.02 | 0.02 |
| Other minerals | mg/kg | 0.01 | 0.1 | 0.1 | 0.1 | 0.1 |

During Production Phase 2 (weeks 50-70), the hens receive a feed with a 1% reduction in protein and amino acid content, while an increased calcium level is provided. The daily feed allowance is 120-130 grams per hen. In addition, formulations designed for shell strengthening and for supporting liver, ovarian, and kidney functions are beneficially incorporated during this phase. The quantitative and qualitative composition of the feed during this period is set forth in the accompanying tables, with the nutrient content specified therein.

| Component | Unit | Production Phase 2 Weeks 50-70 | | Sample recipe | | |
|---|---|---|---|---|---|---|
| | | Min. | Max. | I | II | III |
| FIELD BEAN (*Vicia faba* var. *equina*) | % | 0 | 4 | - | - | 2 |
| VEGETABLE OIL | % | 0.5 | 4 | 1.5 | 2 | 2.2 |
| WHEAT | % | 5 | 45 | 15 | 10 | 13.7 |
| CORN NGMO | % | 15 | 50 | 37.405 | 30 | 19.63 |
| OATS | % | 0 | 5 | - | - | 2 |
| BARLEY | % | 0 | 5 | - | 2 | |
| TRITICALE | % | 0 | 30 | 5 | 16.01 | 23.03 |
| SBM 48.5-50% | % | 3 | 15 | 4 | 6.8 | 3.1 |
| SFM 35-38%CP | % | 5 | 20 | 19.1 | 17.1 | 14.1 |
| DDGS HIGH QUALITY | % | 0 | 15 | 5 | 5.1 | 9 |
| OTHERS BY PRODUCT | % | 0 | 5 | 1.86 | 0 | 0 |
| PHOSPHATE | % | 0.5 | 0.05 | 0.05 | 0.05 | 0.05 |
| COARSE CHALK | % | 2 | 9 | 2 | 2 | 2 |
| FINE CHALK | % | 1.5 | 2.5 | 7.4 | 7.25 | 7.43 |
| SALT | % | 0.2 | 0.4 | 0.27 | 0.27 | 0.27 |
| SODIUM BICARBONATE | % | 0.1 | 0.3 | 0.12 | 0.12 | 0.1 |
| METHIONINE | % | 0.1 | 0.3 | 0.17 | 0.17 | 0.19 |
| LYSINE | % | 0.2 | 0.5 | 0.34 | 0.34 | 0.36 |
| TREONINE | % | 0.01 | 0.1 | 0.02 | 0.02 | 0.03 |
| TRYPTOPHAN | % | 0.01 | 0.1 | 0.01 | 0 | 0 |
| ISOL./VALINE | % | 0.02 | 0.2 | 0.01 | 0.01 | 0.04 |
| CHOLINE CHLORIDE | % | 0.1 | 0.2 | 0.15 | 0.15 | 0.15 |
| ENZYME XYLANASE | % | 0.05 | 0.08 | 0.075 | 0.075 | 0.075 |
| PHYTASE | % | 0.03 | 0.06 | 0.06 | 0.06 | 0.06 |
| FITOBIOTICS | % | 0.05 | 0.1 | 0.015 | 0.02 | 0.02 |
| MYCOBINDER | % | 0.05 | 0.3 | 0.25 | 0.25 | 0.25 |
| RED COLORANT | % | 0.03 | 0.1 | 0.06 | 0.06 | 0.06 |
| YELLOW COLORANT | % | 0.01 | 0.03 | 0.01 | 0.02 | 0.03 |
| VIT-MIN EGG SUPER POWER PREMIX | % | 0.01 | 0.03 | 0.025 | 0.025 | 0.025 |
| Eggshell Improvement Mixture I | % | 0.05 | 0.2 | 0.1 | 0.1 | 0.1 |

| Nutrient | Unit | MIN. | MAX. | I | II | III |
|---|---|---|---|---|---|---|
| Protein | % | 16.0 | 17 | 16.3 | 16.4 | 16.3 |
| Crude fat | % | 4 | - | 4.7 | 4.6 | 4.5 |
| Crude fibre | % | 3.5 | - | 5.3 | 5.2 | 4.8 |
| Ash | % | 11 | - | 12.7 | 12.8 | 12.8 |
| Lysine | % | 0.8 | - | 0.8 | 0.8 | 0.81 |
| Methionine | % | 0.47 | - | 0.47 | 0.47 | 0.48 |
| Met+Cyst | % | 0.77 | - | 0.77 | 0.77 | 0.77 |
| Threonine | % | 0.59 | - | 0.59 | 0.59 | 0.59 |
| Tryptophan | % | 0.18 | - | 0.18 | 0.18 | 0.18 |
| Calcium total | % | 3.7 | - | 3.7 | 3.7 | 3.7 |
| Phosphorus | % | 0.47 | - | 0.47 | 0.47 | 0.47 |
| Chlorine | % | 0.25 | - | 0.25 | 0.25 | 0.25 |
| Sodium | % | 0.16 | - | 0.16 | 0.16 | 0.16 |
| Se add | mg/kg | 0.25 | 0.35 | 0.25 | 0.25 | 0.25 |
| Vit .A add (3a672a) | IU/kg | 10000 | | 10000 | 10000 | 10000 |
| Vit. D3 eq sum add | IU/kg | 2500 | 3200 | 3000 | 3000 | 3000 |
| Vit. E add (3a700) | mg/kg | 70 | 100 | 70 | 70 | 70 |
| Vit. B12 add | µg/kg | 80 | 140 | 100 | 100 | 100 |
| Vit. B group | IU/kg | 0.01 | 0.05 | 0.02 | 0.02 | 0.02 |
| Other minerals | mg/kg | 0.01 | 0.1 | 0.1 | 0.1 | 0.1 |

During Production Phase 3 (above week 70 until the end of production), laying hens are fed at a rate of 122-135 grams per hen per day. This feed contains added selenium (preferably in the form of sodium selenite or selenomethionine), vitamin E (in the form of acetate-rac-alpha-tocopheryl), and vitamin B12 (in the form of cobalamin). The quantitative and qualitative composition of the feed during this phase is set forth in the accompanying tables, with the corresponding nutrient content provided therein.

| Component | Unit | Production Phase 3 Above Week 70 | | Sample recipe | | |
|---|---|---|---|---|---|---|
| | | Min. | Max. | I | II | III |
| FIELD BEAN (*Vicia faba* var. *equina*) | % | 0 | 4 | 0 | 0 | 4 |
| VEGETABLE OIL | % | 0.5 | 4 | 0.85 | 0.85 | 1.15 |
| WHEAT | % | 5 | 45 | 24,865 | 5,575 | 4,935 |
| CORN NGMO | % | 15 | 50 | 30 | 18 | 25 |
| OATS | % | 0 | 5 | 0 | 0 | 2 |
| BARLEY | % | 0 | 5 | 0 | 2 | 0 |
| TRITICALE | % | 0 | 35 | 5 | 35 | 20 |
| SBM 48.5-50% | % | 2 | 15 | 3.8 | 6 | 3.5 |
| SFM 35-38%CP | % | 5 | 20 | 11 | 8.2 | 12 |
| DDGS HIGH QUALITY | % | 0 | 15 | 10 | 10 | 12 |
| OTHERS BY PRODUCT | % | 0 | 5 | 2 | 2 | 3 |
| PHOSPHATE | % | 0 | 0.1 | 0.01 | 0 | 0 |
| COARSE CHALK | % | 2 | 9 | 8.5 | 8.5 | 9 |
| FINE CHALK | % | 1.5 | 2.5 | 2 | 2 | 1.5 |
| SALT | % | 0.2 | 0.4 | 0.26 | 0.27 | 0.26 |
| SODIUM BICARBONATE | % | 0.1 | 0.3 | 0.06 | 0.05 | 0.06 |
| METHIONINE | % | 0.1 | 0.3 | 0.19 | 0.19 | 0.18 |
| LYSINE | % | 0.2 | 0.5 | 0.48 | 0.36 | 0.4 |
| TREONINE | % | 0.01 | 0.1 | 0.06 | 0.05 | 0.05 |
| TRYPTOPHAN | % | 0 | 0.1 | | 0.01 | 0.01 |
| ISOL./VALINE | % | 0.02 | 0.1 | 0.06 | 0.08 | 0.09 |
| CHOLINE CHLORIDE | % | 0.1 | 0.2 | 0.17 | 0.17 | 0.17 |
| ENZYME XYLANASE | % | 0.05 | 0.08 | 0.075 | 0.075 | 0.075 |
| PHYTASE | % | 0.03 | 0.04 | 0.06 | 0.06 | 0.06 |
| FITOBIOTICS | % | 0.05 | 0.1 | 0.015 | 0.015 | 0.015 |
| MYCOBINDER | % | 0.05 | 0.3 | 0.25 | 0.25 | 0.25 |
| RED COLORANT | % | 0.03 | 0.1 | 0.06 | 0.06 | 0.06 |
| YELLOW COLORANT | % | 0.01 | 0.03 | 0.01 | 0.02 | 0.03 |
| VIT-MIN EGG SUPER POWER PREMIX | % | 0.01 | 0.03 | 0.025 | 0.025 | 0.025 |
| Eggshell Improvement Mixture I | % | 0.05 | 0.2 | 0.1 | 0.1 | 0.1 |
| Eggshell Improvement Mixture II | % | 0.05 | 0.2 | 0.01 | 0.01 | 0.01 |

| Nutrient | Unit | MIN. | MAX. | I | II | III |
|---|---|---|---|---|---|---|
| Protein | % | 15.0 | 16.0 | 15.66 | 15.47 | 15.51 |
| Crude fat | % | 4 | - | 3.87 | 3.77 | 4.31 |
| Crude fibre | % | 4 | - | 4.39 | 3.97 | 4.7 |
| Ash | % | 12 | - | 13.58 | 13.55 | 13.68 |
| Lysine | % | 0.78 | - | 0.78 | 0.78 | 0.78 |
| Methionine | % | 0.46 | - | 0.46 | 0.46 | 0.45 |
| Met+Cyst | % | 0.75 | - | 0.75 | 0.74 | 0.74 |
| Threonine | % | 0.58 | - | 0.58 | 0.58 | 0.59 |
| Tryptophan | % | 0.18 | - | 0.18 | 0.18 | 0.18 |
| Calcium total | % | 3.9 | - | 3.9 | 3.9 | 3.9 |
| Phosphorus | % | 0.47 | - | 0.47 | 0.47 | 0.47 |
| Chlorine | % | 0.25 | - | 0.25 | 0.25 | 0.25 |
| Sodium | % | 0.15 | - | 0.15 | 0.15 | 0.15 |
| Se add | mg/kg | 0.25 | 0.35 | 0.25 | 0.25 | 0.25 |
| Vit .A add (3a672a) | IU/kg | 10000 | | 10000 | 10000 | 10000 |
| Vit. D3 eq sum add | IU/kg | 2500 | 3200 | 3000 | 3000 | 3000 |
| Vit. E add (3a700) | mg/kg | 70 | 100 | 70 | 70 | 70 |
| Vit. B12 add | µg/kg | 80 | 140 | 100 | 100 | 100 |
| Vit. B group | IU/kg | 0.01 | 0.05 | 0.02 | 0.02 | 0.02 |
| Other minerals | mg/kg | 0.01 | 0.1 | 0.1 | 0.1 | 0.1 |

Each of the ingredients present in the feed used in any of the phases of the method of feeding laying hens according to the invention is described below. Vicia faba var. equina (commonly known as horse bean) is a variety of faba bean used primarily as a valuable source of plant protein in poultry diets. It provides essential amino acids and carbohydrates, thereby contributing to a diversified amino acid profile for laying hens and supporting optimal egg production and overall health.

Vegetable oil (for example, soybean oil or sunflower oil) is a plant-derived fat source that supplies energy and essential fatty acids. It also improves the palatability of the feed and aids in the better binding of the ingredients in the formulation.

Wheat is a widely used cereal grain, rich in starch and containing moderate levels of protein. It serves as a key energy source for laying hens, helps to maintain the structure of the feed, and works effectively in combination with other grains.

Corn NGMO refers to non-genetically modified corn. It is a primary highly digestible energy ingredient in poultry feeds due to its high starch content and can contribute to a desirable yellow colour in egg yolks without the use of genetic modification.

Oats contain higher fibre levels compared to many other grains and help support proper gut function in laying hens. They also add structure to the overall feed mix and complement other cereals in balancing the nutrient profile.

Barley is a cereal known for its moderate energy content and for containing beta-glucans and fibre. Although it can be slightly more challenging to digest, the use of feed enzymes, such as xylanase, can enhance its nutritional value in laying hen diets.

Triticale is a hybrid of wheat and rye, combining the favourable attributes of both. It provides energy and a good protein level, making it a useful alternative or complementary grain to corn or wheat in poultry feeds.

SBM 48.5-50% (soybean meal) is a high-protein meal with a minimum protein content of 48.5-50%. It is a cornerstone protein source in poultry nutrition, delivering essential amino acids such as lysine and supporting high egg production rates.

SFM 35-38%CP (sunflower meal) is obtained from sunflower seeds and contains at least 35-38% crude protein. It serves as a complementary protein source to soybean meal and contributes to a well-rounded amino acid profile in the feed.

DDGS High Quality (Distillers Dried Grains with Solubles) is a by-product of ethanol production. It contains a high protein level (for example, around 27%) and must be derived from good-quality corn with low mycotoxin content. It adds both protein and energy to poultry rations, making it a valuable component in laying hen diets.

Others By Product refers to additional by-products that may be included to enhance the nutritional content of the feed, such as rapeseed meal or corn germ. These by-products can offer extra protein, fat, or bioactive compounds, depending on the specific material used.

Phosphate, preferably monocalcium phosphate, is a key mineral source for phosphorus and calcium. These nutrients are crucial for bone development and for the formation of strong eggshells in laying hens.

Coarse chalk (coarse limestone or calcium carbonate, size >2 mm) provides calcium in a larger particle size for laying hens. The coarse form supports prolonged calcium release, which is particularly important for the continuous calcification process of the eggshell.

Fine chalk (fine limestone or calcium carbonate, size < 1 mm) also supplies calcium but in a smaller particle size. It complements the coarse form by ensuring both immediate and longer-term availability of calcium for optimal eggshell formation.

Salt, preferably sodium chloride, is necessary for maintaining electrolyte balance and osmotic pressure in the bird's body. It is vital for nutrient transport and for overall metabolic processes in laying hens.

Sodium Bicarbonate (NaHCO₃) is an additional source of sodium that also helps to stabilize the acid-base balance in poultry. It can support proper eggshell formation by influencing blood pH and the availability of bicarbonate.

Methionine is an essential sulphur-containing amino acid required for protein synthesis, feather development, and overall metabolic functions. In high-producing laying hens, methionine supplementation is critical to support optimal egg output and general health.

Lysine is often the first limiting amino acid in cereal-based diets. Its supplementation ensures the proper synthesis of proteins and helps to maximize productivity and egg quality in layers.

Threonine is another essential amino acid involved in immune function and in the production of mucin in the gut. Adequate threonine levels support intestinal health and overall production performance in laying hens.

Tryptophan is necessary for protein synthesis and serves as a precursor for serotonin, which can influence appetite and general well-being in poultry. Including this amino acid at appropriate levels supports efficient feed utilization and egg production.

Isol./Valine (isoleucine and valine) are branched-chain amino acids that are added separately but are often mentioned together. Preferably, isoleucine should be included at 0.77% of the lysine value and valine at 0.55% of the lysine value, ensuring a balanced amino acid profile.

Choline Chloride (vitamin B4) contributes to the proper metabolism of fats, thereby preventing fatty liver syndrome in poultry. It also plays a role in nerve function and supports overall productivity in laying hens.

Enzyme Xylanase helps to break down non-starch polysaccharides, particularly xylans present in grains such as wheat or barley. This enhances nutrient digestibility, reduces intestinal viscosity, and improves the availability of energy in the feed.

Phytase releases phosphorus bound in phytate complexes found in plant ingredients. It increases the bioavailability of phosphorus, reduces the need for inorganic phosphates, and lowers phosphorus excretion, thus benefiting both the birds and the environment.

Fitobiotics, for example a wide group of herbal supplements as represented by herbs, tannins, saponins, essential oils. Comprise herbal-based substances with antimicrobial properties. Their inclusion in poultry feed can help control pathogens such as coccidia, bacteria, and fungi, thereby supporting the birds' health and productivity. As used herein, "Adicox" refers to any natural or plant-derived anticoccidial or antimicrobial additive intended to control coccidia and other pathogens in poultry. Such products commonly consist of phytogenic compounds, such as essential oils, saponins, or specific herb extracts, which are known to exhibit antimicrobial or anticoccidial activity. "Adicox" is mentioned merely as a representative product, and equivalent phytobiotic or anticoccidial preparations with similar efficacy are encompassed within this description. Similarly, as used herein, "Biostrong"-indicates a phytobiotic feed additive composed of herbal extracts, essential oils, or other botanically derived substances that support gut health, improve digestibility, and modulate the intestinal microflora. By helping to control harmful microorganisms and enhance nutrient utilization, such formulations can improve overall bird performance. "Biostrong" is cited solely as an example; other similar herbal-based feed additives also qualify as functional equivalents.

Mycobinder is a toxin binder that captures mycotoxins, thereby protecting the liver and overall health of laying hens. It typically contains substances such as clays or mineral adsorbents that mitigate the negative effects of contaminated raw materials. As used herein, "Mycobinder" refers to a generic toxin-binding composition comprising one or more mineral adsorbents (e.g. bentonite, zeolite, hydrated sodium calcium aluminosilicates) that reduce the bioavailability of mycotoxins in feed. Although the commercial name "Mycobinder" is employed, any equivalent toxin binder with comparable functional properties may be used.

Red colorant, such as canthaxanthin, is added to intensify or adjust the colour of the yolk toward a reddish or deeper orange hue, thereby meeting certain market preferences for egg appearance.

Yellow colorant, for example apo ester (apo-carotenoic acid ethyl ester), further enhances the golden or orange shade of egg yolks. Its precise level may be adjusted to achieve the desired pigmentation.

Vit-Min Egg Super Power Premix is a proprietary vitamin and mineral premix designed to deliver essential nutrients, such as vitamins (including vitamin E and B vitamins) and minerals (including selenium), that enhance the nutritional profile of the eggs and support hen health. As used herein, "Vit-Min Egg Super Power Premix" denotes any vitamin-mineral premix formulated to supply essential vitamins (e.g. vitamins A, D, E, K, B-complex) and minerals (e.g. selenium, zinc, manganese, or iron) at levels beneficial for optimal egg production and nutrient enrichment of eggs. This premix may also include amino acids, antioxidants, or other micronutrients to further enhance poultry health and improve egg quality. Although the commercial product "Vit-Min Egg Super Power Premix" is referenced, any equivalent premix providing a similar spectrum and concentration of vitamins and minerals is contemplated within the scope of the invention.

Eggshell Improvement Mixture I typically contains components such as calcium beta-hydroxybutyrate. It supports reconstruction of intestinal villi and the mineralization process of the eggshell, thereby resulting in improved shell strength and quality.

Eggshell Improvement Mixture II may include substances such as Ferula phytohormone. It aims to strengthen the eggshell by improving the bird's mineral metabolism and overall shell formation physiology. As used herein, phytohormone refers to any plant-based hormonal or phytohormone mixture that helps to regulate and improve the metabolic or reproductive functions of birds. Such mixtures may include phytoestrogens, auxins, cytokinins, or other natural compounds extracted from botanical sources known to enhance shell formation or general reproductive performance in poultry. While "Ferula phytohormone" is cited as an example, any formulation with a substantially similar mechanism of action and composition is considered to be within the scope of the invention.

Throughout the production cycle, the hens are provided with a feeding area that complies with the applicable standards for laying hen housing, thereby ensuring easy access to feeders. In industrial production settings, it is preferable that the hens be fed mechanically (for example, using a caterpillar or auger conveyor) at a speed of approximately 20 m/min.

Preferably, during the Pre-Peak Phase, which spans from 20 to 25 week of age, the feed is provided at a rate of 96-115 grams per hen per day. This controlled feeding strategy helps to prepare the pullets for optimal laying performance at the onset of peak production.

Preferably, during Production Phase 1 (weeks 26-50) and Production Phase 2 (weeks 50-70), the feed is administered at a rate of 110-130 grams per hen per day. Maintaining this range helps to sustain high laying performance and to ensure proper nutritional balance throughout the mid-production period.

Preferably, during Production Phase 3, from 70^{th} week of age to the end of production, the feed is provided at a rate of 122-135 grams per hen per day. This feeding rate ensures adequate nutrition in the later production stages while supporting eggshell strength and overall hen health.

Preferably, the feed composition includes selenium, in the form of sodium selenite or selenomethionine, vitamin E, in the form of acetate-rac-alpha-tocopheryl, and vitamin B12, in the form of cobalamin. Such supplementation serves to enrich the nutritional profile of the eggs and to support the metabolic functions of the hens.

Preferably, the hens have continuous and unrestricted access to the feed, and the minimum daily feed intake during the Production Phase 1 per bird set at 110-115 g in caged housing systems, 121-126 g in aviary systems, and 126-135 g under free-range conditions. These baseline consumption levels are adapted according to factors such as hen breed, ambient temperature, and laying rate.

Preferably, the expected daily feed intake-adjusted for factors such as breed, laying rate, hen weight, plumage condition, and an ambient temperature of approximately 20 °C-is as follows: during the Pre-Lay Phase, 80-95 g per hen; during the Pre-Peak Phase, 96-115 g per hen; during Production Phases 1 and 2, 110-130 g per hen; and during Production Phase 3, 122-135 g per hen (depending on hen weight, temperature, and laying rate).

Preferably, the minimum feed intake amounts are 110-115 g per hen for caged hens, 121-126 g per hen in an aviary system, and 126-135 g per hen for free-range hens.

By applying this feeding method and utilizing the specified feed formulations, the eggs produced contain at least 30% of the adult Recommended Daily Allowance (RDA) for vitamin E, vitamin B12, and selenium after a period of 4 weeks from the initiation of the feeding regimen. These enriched eggs offer higher levels of essential vitamins and minerals, which are beneficial for athletes, seniors, pregnant women, teenagers, vegetarians, and individuals concerned with overall health. In essence, the eggs deliver a higher vitamin content within the same caloric content. Specifically, each egg contains a minimum of 30% of the human RDA for vitamin E ("the vitamin of youth"), which supports fertility in men, reduces the risk of heart attack, exhibits anticancer properties, lowers the risk of Parkinson's and Alzheimer's diseases, improves vision quality, enhances skin and hair condition, exhibits anti-inflammatory effects, and accelerates wound healing.

Each egg also contains a minimum of 30% of the RDA for vitamin B12 ("the strength vitamin"), which contributes to red blood cell formation, mucosal regeneration, neurological functions, and DNA synthesis; supports nervous system function; aids in the prevention of anemia; and assists in alleviating disorders related to hearing, smell, or movement, as well as issues concerning appetite, weight management, nausea, taste, and mood regulation.

Furthermore, each egg provides at least 30% of the RDA for selenium ("an element of life, immunity, and regeneration"), which strengthens the immune system, alleviates the severity of viral and bacterial infections, supports the circulatory system and the normal functioning of the liver and thyroid gland, assists in managing rheumatoid arthritis pain, plays a role in depression treatment, and exhibits supportive effects against breast, lung, colorectal, and prostate cancers, in addition to reducing bronchial asthma symptoms.

Moreover, the enriched vitamin content of the eggs is maintained even after boiling or frying in rapeseed oil throughout their shelf life (up to the minimum durability date, which is 28 days after laying). This ensures that the eggs contribute to a balanced and natural dietary supplementation of essential vitamins. Consuming eggs enriched with 30% of the recommended vitamins on a systematic basis will compensate for the deficiency of these vitamins in a natural and safe manner, and the vitamin levels in raw eggs persist for 28 days even after cooking or frying in rapeseed oil.

### DETAILED DESCRIPTION

The method of feeding laying hens and the feed used for feeding the laying hens is illustrated in one embodiment.

### Example I:

| Component | Unit | Pre-Peak Phase Weeks 20-25 | | Production Phase 1 Weeks 26-50 | | Production Phase 2 Weeks 50-70 | | Production Phase 3 Weeks 70+ | |
|---|---|---|---|---|---|---|---|---|---|
| | | Min. | Max. | Min. | Max. | Min. | Max. | Min. | Max. |
| FIELD BEAN *(Vicia faba* var. *equina*) | % | 0 | 4 | 0 | 4 | 0 | 4 | 0 | 4 |
| VEGETABLE OIL | % | 0.5 | 4 | 0.5 | 4 | 0.5 | 4 | 0.5 | 4 |
| WHEAT | % | 5 | 45 | 5 | 45 | 5 | 45 | 5 | 45 |
| CORN NGMO | % | 15 | 50 | 15 | 50 | 15 | 50 | 15 | 50 |
| OATS | % | 0 | 5 | 0 | 5 | 0 | 5 | 0 | 5 |
| BARLEY | % | 0 | 5 | 0 | 5 | 0 | 5 | 0 | 5 |
| TRITICALE | % | 0 | 30 | 0 | 30 | 0 | 30 | 0 | 35 |
| SBM 48.5-50% | % | 2 | 10 | 5 | 15 | 3 | 15 | 2 | 15 |
| SFM 35-38%CP | % | 5 | 15 | 5 | 20 | 5 | 20 | 5 | 20 |
| DDGS HIGH QUALITY | % | 0 | 10 | 0 | 12 | 0 | 15 | 0 | 15 |
| OTHERS BY PRODUCT | % | 0 | 5 | 0 | 5 | 0 | 5 | 0 | 5 |
| PHOSPHATE | % | 0.1 | 0.5 | 0.2 | 0.7 | 0.5 | 0.05 | 0 | 0.1 |
| COARSE CHALK | % | 2 | 7 | 2 | 10 | 2 | 9 | 2 | 9 |
| FINE CHALK | % | 1.5 | 2.5 | 1.5 | 2.5 | 1.5 | 2.5 | 1.5 | 2.5 |
| SALT | % | 0.2 | 0.4 | 0.2 | 0.4 | 0.2 | 0.4 | 0.2 | 0.4 |
| SODIUM BICARBONATE | % | 0.1 | 0.3 | 0.2 | 0.4 | 0.1 | 0.3 | 0.1 | 0.3 |
| METHIONINE | % | 0.1 | 0.3 | 0.1 | 0.3 | 0.1 | 0.3 | 0.1 | 0.3 |
| LYSINE | % | 0.2 | 0.5 | 0.2 | 0.5 | 0.2 | 0.5 | 0.2 | 0.5 |
| TREONINE | % | 0.01 | 0.1 | 0.01 | 0.1 | 0.01 | 0.1 | 0.01 | 0.1 |
| TRYPTOPHAN | % | 0 | 0.1 | 0.01 | 0.1 | 0.01 | 0.1 | 0 | 0.1 |
| ISOL./VALINE | % | 0.01 | 0.2 | 0.01 | 0.2 | 0.02 | 0.2 | 0.02 | 0.1 |
| CHOLINE CHLORIDE | % | 0.1 | 0.2 | 0.1 | 0.2 | 0.1 | 0.2 | 0.1 | 0.2 |
| ENZYME XYLANASE | % | 0.05 | 0.08 | 0.05 | 0.08 | 0.05 | 0.08 | 0.05 | 0.08 |
| PHYTASE | % | 0.03 | 0.06 | 0.03 | 0.06 | 0.03 | 0.06 | 0.03 | 0.04 |
| FITOBIOTICS | % | 0.05 | 0.1 | 0.05 | 0.1 | 0.05 | 0.1 | 0.05 | 0.1 |
| MYCOBINDER | % | 0.05 | 0.3 | 0.05 | 0.3 | 0.05 | 0.3 | 0.05 | 0.3 |
| RED COLORANT | % | 0.03 | 0.1 | 0.03 | 0.1 | 0.03 | 0.1 | 0.03 | 0.1 |
| YELLOW COLORANT | % | 0.01 | 0.1 | 0.01 | 0.03 | 0.01 | 0.03 | 0.01 | 0.03 |
| VIT-MIN EGG SUPER POWER PREMIX | % | 0.25 | 0.3 | 0.01 | 0.03 | 0.01 | 0.03 | 0.01 | 0.03 |
| Eggshell Improvement Mixture I | % | - | - | - | - | 0.05 | 0.2 | 0.05 | 0.2 |
| Eggshell Improvement Mixture II | % | - | - | - | - | - | - | 0.05 | 0.2 |

| Nutrient | Unit | Pre-Peak Phase Weeks 20-25 | | Production Phase 1 Weeks 26-50 | | Production Phase 2 Weeks 50-70 | | Production Phase 3 Weeks 70+ | |
|---|---|---|---|---|---|---|---|---|---|
| | | MIN | MAX | MIN | MAX | MIN | MAX | MIN | MAX |
| Protein | % | 15.5 | 16.5 | 16.5 | 17.5 | 16.0 | 17 | 15.0 | 16.0 |
| Crude fat | % | 3.5 | - | 3.8 | - | 4 | - | 4 | - |
| Crude fibre | % | 5 | - | 3.5 | - | 3.5 | - | 4 | - |
| Ash | % | 10 | - | 11 | - | 11 | - | 12 | - |
| Lysine | % | 0.77 | - | 0.84 | - | 0.8 | - | 0.78 | - |
| Methionine | % | 0.44 | - | 0.49 | - | 0.47 | - | 0.46 | - |
| Met+Cyst | % | 0.74 | - | 0.8 | - | 0.77 | - | 0.75 | - |
| Threonine | % | 0.57 | - | 0.58 | - | 0.59 | - | 0.58 | - |
| Tryptophan | % | 0.17 | - | 0.18 | - | 0.18 | - | 0.18 | - |
| Calcium total | % | 2.9 | - | 3.6 | - | 3.7 | - | 3.9 | - |
| Phosphorus | % | 0.51 | - | 0.48 | - | 0.47 | - | 0.47 | - |
| Chlorine | % | 0.25 | - | 0.23 | - | 0.25 | - | 0.25 | - |
| Sodium | % | 0.17 | - | 0.17 | - | 0.16 | - | 0.15 | - |
| Se add | mg/kg | 0.25 | 0.35 | 0.25 | 0.35 | 0.25 | 0.35 | 0.25 | 0.35 |
| Vit .A add (3a672a) | IU/kg | 10000 | - | 10000 | | 10000 | | 10000 | |
| Vit. D3 eq sum add | IU/kg | 2500 | 3200 | 2500 | 3200 | 2500 | 3200 | 2500 | 3200 |
| Vit. E add (3a700) | mg/kg | 70 | 100 | 70 | 100 | 70 | 100 | 70 | 100 |
| Vit. B12 add | µg/kg | 80 | 140 | 80 | 140 | 80 | 140 | 80 | 140 |
| Vit. B group | IU/kg | 0.01 | 0.05 | 0.01 | 0.05 | 0.01 | 0.05 | 0.01 | 0.05 |
| Other minerals | mg/kg | 0.01 | 0.1 | 0.01 | 0.1 | 0.01 | 0.1 | 0.01 | 0.1 |

The method of feeding laying hens according to the invention comprises dividing the production cycle into distinct periods, namely: the Rearing Phase (from hatching to from hatching to 17 weeks of age), a Pre-Lay Phase (weeks 18-19), the Pre-Peak Phase (weeks 20 to 25), Production Phase 1 (weeks 26 to 50), Production Phase 2 (weeks 50 to 70), and Production Phase 3 (from over 70^{th} week of age to the end of production). During each of these periods, the hens are provided with feed having a specific quantitative and qualitative composition.
1. During the Rearing Phase, the pullets are reared on a primary feed enriched with high levels of calcium and other nutrients. For approximately 10 days, the primary feed is provided at a rate of 75-95 g per hen per day. When daily egg production reaches 5% of the flock, the diet is switched from the pre-lay feed to the pre-peak feed.
2. During the Pre-Peak Phase, the hens are fed a pre-peak feed at a rate of 96-115 g per hen per day. In this period, an increase in laying performance of up to 8% higher than that achieved with a comparable standard feed is observed, along with a reduction in mortality during the subsequent peak laying phase. Additionally, a safe increase in egg weight, the absence of pullet immaturity, and an enhanced willingness to lay eggs are clearly noticeable. Reduced fattening, a slower decline in laying performance, and a lower occurrence of fatty liver haemorrhagic syndrome (FLHS) are also evident. The quantitative and qualitative composition of the feed administered during this period is set forth in table:

| Component | Unit | Pre-Peak Phase Weeks 20-25 | | Sample recipe | | |
|---|---|---|---|---|---|---|
| | | Min. | Max. | I | II | III |
| FIELD BEAN (*Vicia faba* var. *equina*) | % | 0 | 4 | 0 | 0 | 4 |
| VEGETABLE OIL | % | 0.5 | 4 | 0.9 | 1 | 0.8 |
| WHEAT | % | 5 | 45 | 6 | 26 | 29.14 |
| CORN NGMO | % | 15 | 50 | 30.24 | 17.07 | 26.99 |
| OATS | % | 0 | 5 | 0 | 0 | 2 |
| BARLEY | % | 0 | 5 | 0 | 2 | 0 |
| TRITICALE | % | 0 | 30 | 27 | 17.07 | 0 |
| SBM 48.5-50% | % | 2 | 10 | 2 | 2 | 2 |
| SFM 35-38%CP | % | 5 | 15 | 15 | 17 | 16 |
| DDGS HIGH QUALITY | % | 0 | 10 | 10 | 9 | 8 |
| OTHERS BY PRODUCT | % | 0 | 5 | 0 | 0 | 2 |
| PHOSPHATE | % | 0.1 | 0.5 | 0.1 | 0.1 | 0.2 |
| COARSE CHALK | % | 2 | 7 | 5 | 5 | 5 |
| FINE CHALK | % | 1.5 | 2.5 | 2 | 2 | 2 |
| SALT | % | 0.2 | 0.4 | 0.25 | 0.27 | 0.27 |
| SODIUM BICARBONATE | % | 0.1 | 0.3 | 0.09 | 0.14 | 0.13 |
| METHIONINE | % | 0.1 | 0.3 | 0.15 | 0.14 | 0.15 |
| LYSINE | % | 0.2 | 0.5 | 0.4 | 0.41 | 0.44 |
| TREONINE | % | 0.01 | 0.1 | 0.04 | 0.04 | 0.05 |
| TRYPTOPHAN | % | 0 | 0.1 | 0.01 | 0 | 0 |
| ISOL./VALINE | % | 0.01 | 0.2 | 0.02 | 0.02 | 0.02 |
| CHOLINE CHLORIDE | % | 0.1 | 0.2 | 0.12 | 0.12 | 0.12 |
| ENZYME XYLANASE | % | 0.05 | 0.08 | 0.075 | 0.075 | 0.075 |
| PHYTASE | % | 0.03 | 0.06 | 0.06 | 0.06 | 0.06 |
| FITOBIOTICS | % | 0.05 | 0.1 | 0.015 | 0.015 | 0.015 |
| MYCOBINDER | % | 0.05 | 0.3 | 0.2 | 0.2 | 0.2 |
| RED COLORANT | % | 0.03 | 0.1 | 0.06 | 0.06 | 0.06 |
| YELLOW COLORANT | % | 0.01 | 0.1 | 0.02 | 0.03 | 0.02 |
| VIT-MIN EGG SUPER POWER PREMIX | % | 0.25 | 0.3 | 0.25 | 0.25 | 0.25 |

| Nutrient | Unit | MIN. | MAX. | I | II | III |
|---|---|---|---|---|---|---|
| Protein | % | 15.5 | 16.5 | 16 | 16 | 16.1 |
| Crude fat | % | 3.5 | - | 4 | 3.9 | 3.7 |
| Crude fibre | % | 5 | - | 5 | 5.3 | 5.2 |
| Ash | % | 10 | - | 10.6 | 10.5 | 10.4 |
| Lysine | % | 0.77 | - | 0.77 | 0.77 | 0.77 |
| Methionine | % | 0.44 | - | 0.44 | 0.43 | 0.44 |
| Met+Cyst | % | 0.74 | - | 0.74 | 0.73 | 0.73 |
| Threonine | % | 0.57 | - | 0.57 | 0.57 | 0.57 |
| Tryptophan | % | 0.17 | - | 0.17 | 0.17 | 0.17 |
| Calcium total | % | 2.9 | - | 2.9 | 2.9 | 2.9 |
| Phosphorus | % | 0.51 | - | 0.49 | 0.49 | 0.49 |
| Chlorine | % | 0.25 | - | 0.25 | 0.25 | 0.25 |
| Sodium | % | 0.17 | - | 0.17 | 0.17 | 0.17 |
| Se add | mg/kg | 0.25 | 0.35 | 0.25 | 0.25 | 0.25 |
| Vit .A add (3a672a) | IU/kg | 10000 | - | 10000 | 10000 | 10000 |
| Vit. D3 eq sum add | IU/kg | 2500 | 3200 | 3000 | 3000 | 3000 |
| Vit. E add (3a700) | mg/kg | 70 | 100 | 70 | 70 | 70 |
| Vit. B12 add | µg/kg | 80 | 140 | 100 | 100 | 100 |
| Vit. B group | IU/kg | 0.01 | 0.05 | 0.02 | 0.02 | 0.02 |
| Other minerals | mg/kg | 0.01 | 0.1 | 0.1 | 0.1 | 0.1 |

3. During Production Phase 1-the "peak" phase-the hens are fed a peak feed with a high nutrient density to support a safe and robust peak in egg production at a rate of 110-130 g per hen per day. The composition of the feed during this phase is set forth in table: 4.

| Component | Unit | Production Phase 1 Weeks 26-50 | | Sample recipe | | |
|---|---|---|---|---|---|---|
| | | Min. | Max. | I | II | III |
| FIELD BEAN (*Vicia faba* var. *equina*) | % | 0 | 4 | 0 | 2 | 4 |
| VEGETABLE OIL | % | 0.5 | 4 | 2 | 1.2 | 1.4 |
| WHEAT | % | 5 | 45 | 19.87 | 5 | 7.25 |
| CORN NGMO | % | 15 | 50 | 15 | 27.72 | 30 |
| OATS | % | 0 | 5 | 0 | 5 | 0 |
| BARLEY | % | 0 | 5 | 5 | 0 | 0 |
| TRITICALE | % | 0 | 30 | 5 | 15 | 16.285 |
| SBM 48.5-50% | % | 5 | 15 | 7 | 13 | 10 |
| SFM 35-38%CP | % | 5 | 20 | 15 | 10 | 5 |
| DDGS HIGH QUALITY | % | 0 | 12 | 5 | 0 | 8 |
| OTHERS BY PRODUCT | % | 0 | 5 | 15 | 10 | 7 |
| PHOSPHATE | % | 0.2 | 0.7 | 0.2 | 0.35 | 0.25 |
| COARSE CHALK | % | 2 | 10 | 6.9 | 6.9 | 6.4 |
| FINE CHALK | % | 1.5 | 2.5 | 2 | 2 | 2.5 |
| SALT | % | 0.2 | 0.4 | 0.24 | 0.26 | 0.25 |
| SODIUM BICARBONATE | % | 0.2 | 0.4 | 0.2 | 0.19 | 0.19 |
| METHIONINE | % | 0.1 | 0.3 | 0.21 | 0.22 | 0.23 |
| LYSINE | % | 0.2 | 0.5 | 0.35 | 0.22 | 0.26 |
| TREONINE | % | 0.01 | 0.1 | 0.05 | 0.02 | 0.04 |
| TRYPTOPHAN | % | 0.01 | 0.1 | 0 | 0.02 | 0 |
| ISOL./VALINE | % | 0.01 | 0.2 | 0.09 | 0.02 | 0.07 |
| CHOLINE CHLORIDE | % | 0.1 | 0.2 | 0.12 | 0.12 | 0.12 |
| ENZYME XYLANASE | % | 0.05 | 0.08 | 0.075 | 0.075 | 0.075 |
| PHYTASE | % | 0.03 | 0.06 | 0.06 | 0.06 | 0.06 |
| FITOBIOTICS | % | 0.05 | 0.1 | 0.05 | 0.05 | 0.05 |
| MYCOBINDER | % | 0.05 | 0.3 | 0.25 | 0.25 | 0.25 |
| RED COLORANT | % | 0.03 | 0.1 | 0.06 | 0.06 | 0.06 |
| YELLOW COLORANT | % | 0.01 | 0.03 | 0.02 | 0.015 | 0.01 |
| VIT-MIN EGG SUPER POWER PREMIX | % | 0.01 | 0.03 | 0.25 | 0.25 | 0.25 |

| Nutrient | Unit | MIN. | MAX. | I | II | III |
|---|---|---|---|---|---|---|
| Protein | % | 16.5 | 17.5 | 17 | 17.1 | 17.2 |
| Crude fat | % | 3.8 | - | 5.22 | 4.25 | 4.55 |
| Crude fibre | % | 3.5 | - | 4.9 | 4.1 | 4.35 |
| Ash | % | 11 | - | 12.4 | 12.4 | 12.3 |
| Lysine | % | 0.84 | - | 0.84 | 0.84 | 0.84 |
| Methionine | % | 0.49 | - | 0.5 | 0.5 | 0.49 |
| Met+Cyst | % | 0.8 | - | 0.8 | 0.8 | 0.8 |
| Threonine | % | 0.58 | - | 0.58 | 0.58 | 0.58 |
| Tryptophan | % | 0.18 | - | 0.18 | 0.18 | 0.18 |
| Calcium total | % | 3.6 | - | 3.6 | 3.6 | 3.6 |
| Phosphorus | % | 0.48 | - | 0.52 | 0.49 | 0.49 |
| Chlorine | % | 0.23 | - | 0.23 | 0.23 | 0.23 |
| Sodium | % | 0.17 | - | 0.17 | 0.17 | 0.17 |
| Se add | mg/kg | 0.25 | 0.35 | 0.3 | 0.3 | 0.3 |
| Vit .A add (3a672a) | IU/kg | 10000 | | 10000 | 1000 | 1000 |
| Vit. D3 eq sum add | IU/kg | 2500 | 3200 | 3000 | 3000 | 3000 |
| Vit. E add (3a700) | mg/kg | 70 | 100 | 70 | 70 | 70 |
| Vit. B12 add | µg/kg | 80 | 140 | 100 | 100 | 100 |
| Vit. B group | IU/kg | 0.01 | 0.05 | 0.02 | 0.02 | 0.02 |
| Other minerals | mg/kg | 0.01 | 0.1 | 0.1 | 0.1 | 0.1 |

5. During Production Phase 2, beyond the 50^{th} week of age, the hens are fed a feed with a 1% reduction in protein and amino acid content and an increased calcium level at a rate of 120-130 g per hen per day. Preferably, formulations designed to strengthen the eggshell and to support the liver, ovaries, and kidneys are also utilized during this phase. The quantitative and qualitative composition of the feed during this period is set forth in table:

| Component | Unit | Production Phase 2 Weeks 50-70 | | Sample recipe | | |
|---|---|---|---|---|---|---|
| | | Min. | Max. | I | II | III |
| FIELD BEAN (*Vicia faba* var. *equina*) | % | 0 | 4 | - | - | 2 |
| VEGETABLE OIL | % | 0.5 | 4 | 1.5 | 2 | 2.2 |
| WHEAT | % | 5 | 45 | 15 | 10 | 13.7 |
| CORN NGMO | % | 15 | 50 | 37.405 | 30 | 19.63 |
| OATS | % | 0 | 5 | - | - | 2 |
| BARLEY | % | 0 | 5 | - | 2 | |
| TRITICALE | % | 0 | 30 | 5 | 16.01 | 23.03 |
| SBM 48.5-50% | % | 3 | 15 | 4 | 6.8 | 3.1 |
| SFM 35-38%CP | % | 5 | 20 | 19.1 | 17.1 | 14.1 |
| DDGS HIGH QUALITY | % | 0 | 15 | 5 | 5.1 | 9 |
| OTHERS BY PRODUCT | % | 0 | 5 | 1.86 | 0 | 0 |
| PHOSPHATE | % | 0.5 | 0.05 | 0.05 | 0.05 | 0.05 |
| COARSE CHALK | % | 2 | 9 | 2 | 2 | 2 |
| FINE CHALK | % | 1.5 | 2.5 | 7.4 | 7.25 | 7.43 |
| SALT | % | 0.2 | 0.4 | 0.27 | 0.27 | 0.27 |
| SODIUM BICARBONATE | % | 0.1 | 0.3 | 0.12 | 0.12 | 0.1 |
| METHIONINE | % | 0.1 | 0.3 | 0.17 | 0.17 | 0.19 |
| LYSINE | % | 0.2 | 0.5 | 0.34 | 0.34 | 0.36 |
| TREONINE | % | 0.01 | 0.1 | 0.02 | 0.02 | 0.03 |
| TRYPTOPHAN | % | 0.01 | 0.1 | 0.01 | 0 | 0 |
| ISOL./VALINE | % | 0.02 | 0.2 | 0.01 | 0.01 | 0.04 |
| CHOLINE CHLORIDE | % | 0.1 | 0.2 | 0.15 | 0.15 | 0.15 |
| ENZYME XYLANASE | % | 0.05 | 0.08 | 0.075 | 0.075 | 0.075 |
| PHYTASE | % | 0.03 | 0.06 | 0.06 | 0.06 | 0.06 |
| FITOBIOTICS | % | 0.05 | 0.1 | 0.015 | 0.02 | 0.02 |
| MYCOBINDER | % | 0.05 | 0.3 | 0.25 | 0.25 | 0.25 |
| RED COLORANT | % | 0.03 | 0.1 | 0.06 | 0.06 | 0.06 |
| YELLOW COLORANT | % | 0.01 | 0.03 | 0.01 | 0.02 | 0.03 |
| VIT-MIN EGG SUPER POWER PREMIX | % | 0.01 | 0.03 | 0.025 | 0.025 | 0.025 |
| Eggshell Improvement Mixture I | % | 0.05 | 0.2 | 0.1 | 0.1 | 0.1 |

| Nutrient | Unit | MIN. | MAX. | I | II | III |
|---|---|---|---|---|---|---|
| Protein | % | 16.0 | 17 | 16.3 | 16.4 | 16.3 |
| Crude fat | % | 4 | - | 4.7 | 4.6 | 4.5 |
| Crude fibre | % | 3.5 | - | 5.3 | 5.2 | 4.8 |
| Ash | % | 11 | - | 12.7 | 12.8 | 12.8 |
| Lysine | % | 0.8 | - | 0.8 | 0.8 | 0.81 |
| Methionine | % | 0.47 | - | 0.47 | 0.47 | 0.48 |
| Met+Cyst | % | 0.77 | - | 0.77 | 0.77 | 0.77 |
| Threonine | % | 0.59 | - | 0.59 | 0.59 | 0.59 |
| Tryptophan | % | 0.18 | - | 0.18 | 0.18 | 0.18 |
| Calcium total | % | 3.7 | - | 3.7 | 3.7 | 3.7 |
| Phosphorus | % | 0.47 | - | 0.47 | 0.47 | 0.47 |
| Chlorine | % | 0.25 | - | 0.25 | 0.25 | 0.25 |
| Sodium | % | 0.16 | - | 0.16 | 0.16 | 0.16 |
| Se add | mg/kg | 0.25 | 0.35 | 0.25 | 0.25 | 0.25 |
| Vit .A add (3a672a) | IU/kg | 10000 | | 10000 | 10000 | 10000 |
| Vit. D3 eq sum add | IU/kg | 2500 | 3200 | 3000 | 3000 | 3000 |
| Vit. E add (3a700) | mg/kg | 70 | 100 | 70 | 70 | 70 |
| Vit. B12 add | µg/kg | 80 | 140 | 100 | 100 | 100 |
| Vit. B group | IU/kg | 0.01 | 0.05 | 0.02 | 0.02 | 0.02 |
| Other minerals | mg/kg | 0.01 | 0.1 | 0.1 | 0.1 | 0.1 |

6. During Production Phase 3, from over 70 weeks until the end of production, the hens are fed at a rate of 122-135 g per hen per day. This feed contains selenium (preferably in the form of sodium selenite or selenomethionine), vitamin E (in the form of acetate-rac-alpha-tocopheryl), and vitamin B12 (in the form of cobalamin). The quantitative and qualitative composition of the feed during this phase is set forth in table:

| Component | Unit | Production Phase 3 Above 70 Weeks | | Sample recipe | | |
|---|---|---|---|---|---|---|
| | | Min. | Max. | I | II | III |
| FIELD BEAN (*Vicia faba* var. *equina*) | % | 0 | 4 | 0 | 0 | 4 |
| VEGETABLE OIL | % | 0.5 | 4 | 0.85 | 0.85 | 1.15 |
| WHEAT | % | 5 | 45 | 24,865 | 5,575 | 4,935 |
| CORN NGMO | % | 15 | 50 | 30 | 18 | 25 |
| OATS | % | 0 | 5 | 0 | 0 | 2 |
| BARLEY | % | 0 | 5 | 0 | 2 | 0 |
| TRITICALE | % | 0 | 35 | 5 | 35 | 20 |
| SBM 48.5-50% | % | 2 | 15 | 3.8 | 6 | 3.5 |
| SFM 35-38%CP | % | 5 | 20 | 11 | 8.2 | 12 |
| DDGS HIGH QUALITY | % | 0 | 15 | 10 | 10 | 12 |
| OTHERS BY PRODUCT | % | 0 | 5 | 2 | 2 | 3 |
| PHOSPHATE | % | 0 | 0.1 | 0.01 | 0 | 0 |
| COARSE CHALK | % | 2 | 9 | 8.5 | 8.5 | 9 |
| FINE CHALK | % | 1.5 | 2.5 | 2 | 2 | 1.5 |
| SALT | % | 0.2 | 0.4 | 0.26 | 0.27 | 0.26 |
| SODIUM BICARBONATE | % | 0.1 | 0.3 | 0.06 | 0.05 | 0.06 |
| METHIONINE | % | 0.1 | 0.3 | 0.19 | 0.19 | 0.18 |
| LYSINE | % | 0.2 | 0.5 | 0.48 | 0.36 | 0.4 |
| TREONINE | % | 0.01 | 0.1 | 0.06 | 0.05 | 0.05 |
| TRYPTOPHAN | % | 0 | 0.1 | 0 | 0.01 | 0.01 |
| ISOL./VALINE | % | 0.02 | 0.1 | 0.06 | 0.08 | 0.09 |
| CHOLINE CHLORIDE | % | 0.1 | 0.2 | 0.17 | 0.17 | 0.17 |
| ENZYME XYLANASE | % | 0.05 | 0.08 | 0.075 | 0.075 | 0.075 |
| PHYTASE | % | 0.03 | 0.04 | 0.06 | 0.06 | 0.06 |
| FITOBIOTICS | % | 0.05 | 0.1 | 0.015 | 0.015 | 0.015 |
| MYCOBINDER | % | 0.05 | 0.3 | 0.25 | 0.25 | 0.25 |
| RED COLORANT | % | 0.03 | 0.1 | 0.06 | 0.06 | 0.06 |
| YELLOW COLORANT | % | 0.01 | 0.03 | 0.01 | 0.02 | 0.03 |
| VIT-MIN EGG SUPER POWER PREMIX | % | 0.01 | 0.03 | 0.025 | 0.025 | 0.025 |
| Eggshell Improvement Mixture I | % | 0.05 | 0.2 | 0.1 | 0.1 | 0.1 |
| Eggshell Improvement Mixture II | % | 0.05 | 0.2 | 0.01 | 0.01 | 0.01 |

| Nutrient | Unit | MIN. | MAX. | I | II | III |
|---|---|---|---|---|---|---|
| Protein | % | 15.0 | 16.0 | 15.66 | 15.47 | 15.51 |
| Crude fat | % | 4 | - | 3.87 | 3.77 | 4.31 |
| Crude fibre | % | 4 | - | 4.39 | 3.97 | 4.7 |
| Ash | % | 12 | - | 13.58 | 13.55 | 13.68 |
| Lysine | % | 0.78 | - | 0.78 | 0.78 | 0.78 |
| Methionine | % | 0.46 | - | 0.46 | 0.46 | 0.45 |
| Met+Cyst | % | 0.75 | - | 0.75 | 0.74 | 0.74 |
| Threonine | % | 0.58 | - | 0.58 | 0.58 | 0.59 |
| Tryptophan | % | 0.18 | - | 0.18 | 0.18 | 0.18 |
| Calcium total | % | 3.9 | - | 3.9 | 3.9 | 3.9 |
| Phosphorus | % | 0.47 | - | 0.47 | 0.47 | 0.47 |
| Chlorine | % | 0.25 | - | 0.25 | 0.25 | 0.25 |
| Sodium | % | 0.15 | - | 0.15 | 0.15 | 0.15 |
| Se add | mg/kg | 0.25 | 0.35 | 0.25 | 0.25 | 0.25 |
| Vit .A add (3a672a) | IU/kg | 10000 | | 10000 | 10000 | 10000 |
| Vit. D3 eq sum add | IU/kg | 2500 | 3200 | 3000 | 3000 | 3000 |
| Vit. E add (3a700) | mg/kg | 70 | 100 | 70 | 70 | 70 |
| Vit. B12 add | µg/kg | 80 | 140 | 100 | 100 | 100 |
| Vit. B group | IU/kg | 0.01 | 0.05 | 0.02 | 0.02 | 0.02 |
| Other minerals | mg/kg | 0.01 | 0.1 | 0.1 | 0.1 | 0.1 |

In some embodiments, the VIT-MIN EGG SUPER POWER PREMIX has the following composition:

| **Nutrient** | **Unit** | **Product value** |
|---|---|---|
| Dry matter | % | 96,61 |
| Fe add | mg/kg | 14000 |
| Cu add | mg/kg | 6400 |
| Cu sulphate pentahydrate (3b405) | mg/kg | 5200 |
| Cu chelate glycin (3b413) | mg/kg | 1200 |
| Zn add | mg/kg | 32000 |
| Zn sulphate monohydrate (3b605) | mg/kg | 28000 |
| Zn chelate glycin (3b607) | mg/kg | 4000 |
| Mn add | mg/kg | 40000 |
| Mn oxide (3b502) | mg/kg | 36000 |
| Mn chelate glycin (3b506) | mg/kg | 4000 |
| I add | mg/kg | 520 |
| Se add | mg/kg | 100 |
| Se selenite (3b801) | mg/kg | 60 |
| Se SelSaf (3b812) | mg/kg | 40 |
| Vit A add (3a672a) | IU/kg | 4000000 |
| Vit D3 add (3a671) | IU/kg | 1200000 |
| Vit D3 (25-OH) add (IU) | IU/kg | 80000 |
| Vit E add (3a700i) | mg/kg | 28000 |
| Vit B1 add (3a821) | mg/kg | 800 |
| Vit B2 add (3a825i) | mg/kg | 2000 |
| Vit B6 add (3a831) | mg/kg | 1600 |
| Vit B12 sum add | µg/kg | 40000 |
| Vit C ascorbic add (3a300) | mg/kg | 80000 |
| Vit K3 MNB add (3a711) | mg/kg | 1200 |
| Betain HCl add (3a925) | mg/kg | 30000 |
| Biotin add (3a880) | µg/kg | 240000 |
| Nicotinic acid-added 3a314 | mg/kg | 12000 |
| Pantothenic acid add | mg/kg | 3200 |
| Folic acid add (3a316) | mg/kg | 800 |
| Capsanthin (2a160c) | mg/kg | 1400 |
| Lutein (E161b) | mg/kg | 720 |
| Phytase equivalents | sFU/kg | 200000 |
| Phytase 0-250 sFU | % | 40000 |
| Phytase 250-500 sFU | % | 40000 |
| Danisco Xylanase (4a11) | U/kg | 800000 |
| Natugrain TS-xyl (4a7) | TXU/kg | 240000 |
| Natugrain TS-gl4 (4a7) | TGU/kg | 107142,9 |

## Claims

1. A method of feeding laying hens, **characterized in that** the laying period from 20 weeks of age to the end of production is divided into the following phases: a Pre-Peak Phase (weeks 20-25), a Production Phase 1 (weeks 26-50), a Production Phase 2 (weeks 50-70), and a Production Phase 3 (weeks from 70 to the end of production), wherein, during each phase, the hens are fed a feed of the following composition:
| Component | Unit | Pre-Peak Phase | | Production Phase 1 | | Production Phase 2 | | Production Phase 3 | |
|---|---|---|---|---|---|---|---|---|---|
| | | Min. | Max. | Min. | Max. | Min. | Max. | Min. | Max. |
| FIELD BEAN (*Vicia faba* var. *equina)* | % | 0 | 4 | 0 | 4 | 0 | 4 | 0 | 4 |
| VEGETABLE OIL | % | 0.5 | 4 | 0.5 | 4 | 0.5 | 4 | 0.5 | 4 |
| WHEAT | % | 5 | 45 | 5 | 45 | 5 | 45 | 5 | 45 |
| CORN NGMO | % | 15 | 50 | 15 | 50 | 15 | 50 | 15 | 50 |
| OATS | % | 0 | 5 | 0 | 5 | 0 | 5 | 0 | 5 |
| BARLEY | % | 0 | 5 | 0 | 5 | 0 | 5 | 0 | 5 |
| TRITICALE | % | 0 | 30 | 0 | 30 | 0 | 30 | 0 | 35 |
| SBM 48.5-50% | % | 2 | 10 | 5 | 15 | 3 | 15 | 2 | 15 |
| SFM 35-38%CP | % | 5 | 15 | 5 | 20 | 5 | 20 | 5 | 20 |
| DDGS HIGH QUALITY | % | 0 | 10 | 0 | 12 | 0 | 15 | 0 | 15 |
| OTHERS BY PRODUCT | % | 0 | 5 | 0 | 5 | 0 | 5 | 0 | 5 |
| PHOSPHATE | % | 0.1 | 0.5 | 0.2 | 0.7 | 0.5 | 0.05 | 0 | 0.1 |
| COARSE CHALK | % | 2 | 7 | 2 | 10 | 2 | 9 | 2 | 9 |
| FINE CHALK | % | 1.5 | 2.5 | 1.5 | 2.5 | 1.5 | 2.5 | 1.5 | 2.5 |
| SALT | % | 0.2 | 0.4 | 0.2 | 0.4 | 0.2 | 0.4 | 0.2 | 0.4 |
| SODIUM BICARBONATE | % | 0.1 | 0.3 | 0.2 | 0.4 | 0.1 | 0.3 | 0.1 | 0.3 |
| METHIONINE | % | 0.1 | 0.3 | 0.1 | 0.3 | 0.1 | 0.3 | 0.1 | 0.3 |
| LYSINE | % | 0.2 | 0.5 | 0.2 | 0.5 | 0.2 | 0.5 | 0.2 | 0.5 |
| TREONINE | % | 0.01 | 0.1 | 0.01 | 0.1 | 0.01 | 0.1 | 0.01 | 0.1 |
| TRYPTOPHAN | % | 0 | 0.1 | 0.01 | 0.1 | 0.01 | 0.1 | 0 | 0.1 |
| ISOL./VALINE | % | 0.01 | 0.2 | 0.01 | 0.2 | 0.02 | 0.2 | 0.02 | 0.1 |
| CHOLINE CHLORIDE | % | 0.1 | 0.2 | 0.1 | 0.2 | 0.1 | 0.2 | 0.1 | 0.2 |
| ENZYME XYLANASE | % | 0.05 | 0.08 | 0.05 | 0.08 | 0.05 | 0.08 | 0.05 | 0.08 |
| PHYTASE | % | 0.03 | 0.06 | 0.03 | 0.06 | 0.03 | 0.06 | 0.03 | 0.04 |
| FITOBIOTICS | % | 0.05 | 0.1 | 0.05 | 0.1 | 0.05 | 0.1 | 0.05 | 0.1 |
| MYCOBINDER | % | 0.05 | 0.3 | 0.05 | 0.3 | 0.05 | 0.3 | 0.05 | 0.3 |
| RED COLORANT | % | 0.03 | 0.1 | 0.03 | 0.1 | 0.03 | 0.1 | 0.03 | 0.1 |
| YELLOW COLORANT | % | 0.01 | 0.1 | 0.01 | 0.03 | 0.01 | 0.03 | 0.01 | 0.03 |
| VIT-MIN EGG SUPER POWER PREMIX | % | 0.25 | 0.3 | 0.01 | 0.03 | 0.01 | 0.03 | 0.01 | 0.03 |
| Eggshell Improvement Mixture I | % | - | - | - | - | 0.05 | 0.2 | 0.05 | 0.2 |
| Eggshell Improvement Mixture II | % | - | - | - | - | - | - | 0.05 | 0.2 |

2. The method according to claim 1, **characterized in that** during the Pre-Peak Phase the feed is provided at a rate of 96-115 grams per hen per day.

3. The method according to claim 1 or 2, **characterized in that** during the Production Phase 1 and the Production Phase 2 the feed is provided at a rate of 110-130 grams per hen per day.

4. The method according to one of claims 1-3, **characterized in that** during the Production Phase 3 the feed is provided at a rate of 122-135 grams per hen per day.

5. The method according to any one of claims 1-4, **characterized in that** the feed further comprises: selenium in the form of sodium selenite or selenomethionine; vitamin E in the form of acetate-rac-alpha-tocopheryl; and vitamin B12 in the form of cobalamin.

6. The method according to any one of claims 1, 2, 4 or 5, **characterized in that** the hens have continuous and unrestricted access to feed, and the daily feed intake during the Production Phase 1 per hen is not less than 110-115 g in caged housing systems; 121-126 g in aviary systems; and 126-135 g in free-range systems.
